(19)

**Europäisches Patentamt**
**European Patent Office**
**Office européen des brevets**

(11) **EP 2 450 174 A1**

(12) **EUROPEAN PATENT APPLICATION**
published in accordance with Art. 153(4) EPC

(43) Date of publication:
**09.05.2012 Bulletin 2012/19**

(21) Application number: **10793916.7**

(22) Date of filing: **13.05.2010**

(51) Int Cl.:
*B29C 47/12* (2006.01)     *C08J 9/04* (2006.01)
*C08K 5/01* (2006.01)     *C08L 97/02* (2006.01)
*C08L 101/00* (2006.01)     *B29K 105/04* (2006.01)

(86) International application number:
**PCT/JP2010/058102**

(87) International publication number:
**WO 2011/001745 (06.01.2011 Gazette 2011/01)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **02.07.2009 JP 2009158202**

(71) Applicant: **WPC Corporation**
**Tokyo 108-0073 (JP)**

(72) Inventors:
• **KIKUCHI, Takeyasu**
**Tokyo 108-0073 (JP)**
• **MORITA, Kazumasa**
**Tokyo 108-0073 (JP)**
• **HIGASHI, Koji**
**Tokyo 108-0073 (JP)**
• **NAKAMURA, Yuichiro**
**Tokyo 108-0073 (JP)**

(74) Representative: **McLean, Robert Andreas et al**
**Dummett Copp LLP**
**25 The Square**
**Martlesham Heath**
**Ipswich, Suffolk IP5 3SL (GB)**

(54) **MOLDING MATERIAL FOR EXTRUSION FOAM MOLDING, PROCESS FOR PRODUCING SAME, WOODY MOLDED FOAM PRODUCED FROM THE MOLDING MATERIAL, AND PROCESS AND APPARATUS FOR PRODUCING THE WOODY MOLDED FOAM**

(57)     Disclosed is a molding material for extrusion foam molding from which woody molded foam of high quality can be obtained. From the molding material, woody molded foam of high quality with no defects is efficiently produced. Constituent materials comprising woodmeal and a thermoplastic resin as major components and containing 1-5 wt% alkane having a molecular weight of 300-1,000 g/mol are melt-kneaded until the components come into an evenly dispersed state, and the resultant mixture is molded into pellets having a given diameter to obtain a molding material. Subsequently, this molding material is extrusion-molded into a given shape together with a blowing agent by means of an extrusion molding device, thereby obtaining woody molded foam. The extrusion molding is preferably conducted in a manner such that the extrudate (25a) extruded from the extruder (12) is introduced into the molding chamber (31) of a molding die (30) while keeping the extrudate in the pressurized state and the extrudate (25a) is released from the pressure upon introduction into the molding chamber (31) of the molding die (30) to foam the extrudate (25a).

FIG. 2

## Description

<u>Field of the Invention</u>

The present invention relates to a molding material for extrusion foam molding, containing thermoplastic resin and wood meal as main ingredients, and a method for manufacturing the same; to a foamed synthetic wood product manufactured with the molding material; and to a method and apparatus for manufacturing the same.

<u>Description of the Related Art</u>

Because of the characteristics of resin molded products, such as resistance to decomposition and their wood textures, molded products (synthetic wood products) produced by forming into a desired shape a molding material obtained by melt-kneading thermoplastic resin and wood meal are widely used, for example, as building materials for wood decks that are installed outdoors.

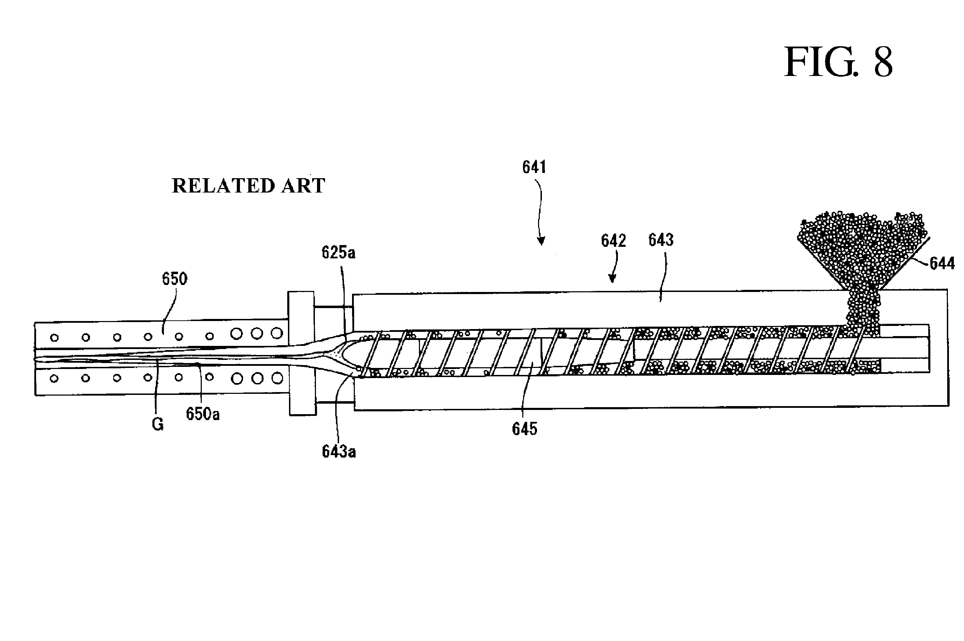

One example of extrusion apparatuses used to manufacture this kind of synthetic wood products by extrusion molding is shown in Fig. 8.

This extrusion apparatus 641 includes an extruder 642 provided with a cylindrical barrel 643 and a screw 645 rotatably mounted in this barrel 643; and a driving source (not shown in the figure) for rotationally driving the screw 645 of the extruder 642. It further includes a die 650 that receives and forms a molding material 625a extruded from an outlet 643a provided at the barrel 643 of this extruder 642.

In order to form a synthetic wood product (board) using the extrusion apparatus 641 with such a structure, a raw mixture of necessary materials, such as wood meal, thermoplastic resin, pigment, and reinforcing agent, blended at predetermined compounding ratios, is supplied into the barrel 643 of the extruder through a hopper 644 provided in the barrel 643; an extrusion force is applied towards the tip of the screw 645 of the extruder by rotationally driving the screw 645 with the driving source to pressure-feed the raw mixture while it is being heated and kneaded; and the melted and plasticized molding material 625a is extruded at the tip side of the screw 645 from the outlet 643a provided in the barrel 643 into a molding chamber 650a formed in the die 650, thereby forming the synthetic wood product having a cross-sectional shape similar to that of the molding chamber 650a (refer to, for example, Patent Document 1).

<u>Document of Related Art</u>

<u>Patent Document</u>

Patent Document 1: Japanese Unexamined Patent Application Publication No. 8-118452

<u>Disclosure of the Invention</u>

<u>Problem to be Solved by the Invention</u>

When the raw mixture containing thermoplastic resin and wood meal as main ingredients is to be formed into a predetermined shape by extrusion molding, the molding material 625a melt-kneaded by the extruder 642 is formed into a desired shape in the die 650 and then cooled and solidified into the intended product as described above. During this process, the key point is how to manufacture a product with stable quality while maintaining high productivity.

In the manufacture of a synthetic wood product containing a large amount of wood meal, however, it is difficult to control the flow of the molding material 625a, hence making it difficult to achieve both high productivity and stable quality of the manufactured product.

In particular, when a foaming agent is added to raw materials to foam the melted and plasticized molding material 625a into the synthetic wood product (referred to as the "foamed synthetic wood product" in the present invention), it becomes more difficult to control the flow of the molding material 625a in the extruder 642 and the die 650 because the pressure or the flow of the molding material 625a, for example, abruptly changes as the foaming agent foams, causing pulsation in the molding material 625a. Thus, the finally obtained foamed synthetic wood product is likely to suffer defects such as an uneven distribution of bubbles or generation of nests resulting from an uneven distribution of foaming gases in the molding material 625a, generation of wrinkles on the surface resulting from pulsation of the molding material 625a and so forth, making it even more difficult to manufacture stable products with uniform quality.

For example, when the raw mixture prepared simply by adding a foaming agent to the above-described raw materials including wood meal, thermoplastic resin, pigment, reinforcing agent, and so forth is to be extruded using the known extrusion apparatus 641 described with reference to Fig. 8, the heat generated in the barrel 643 of the extruder 642 during melt-kneading causes the foaming agent to produce foaming gases, which then inflate to produce bubbles which are likely to collect in the center of the molding material.

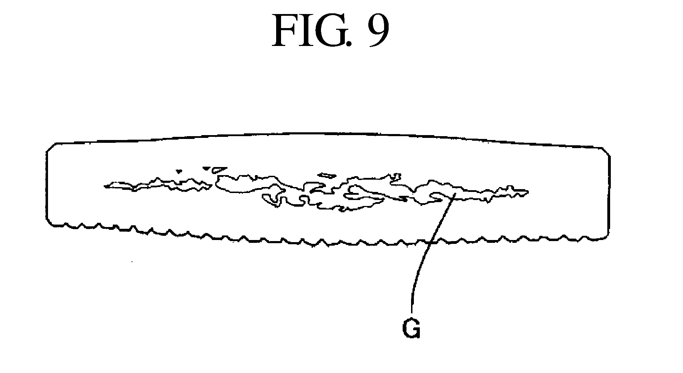

When this molding material 625a is cooled and solidified in the molding chamber 650a formed in the die 650 with bubbles being collected in the center of the molding material 625a, the bubbles further collect at the center portion (core portion) in the width direction of the foamed synthetic wood product, causing an internal defect due to an internal void G which is larger than a so-called "nest." For this reason, a rectangular shape in cross section of the foamed synthetic wood product cannot be ensured because the central portion of the foamed synthetic wood product swells in both directions in the thickness direction at the center in the width direction along the longitudinal direction, and as a result, the foamed synthetic wood product cannot be used as a product. Furthermore, the strength is so low that a foam-molded product having a quality as high as that of a non-foamed item cannot be manufactured on a commercial basis or is very difficult to manufacture even at an experimental level (Fig. 9). In Fig. 9, to ensure strength, a saw-toothed groove is formed at the lower side of the molded board along the longitudinal direction.

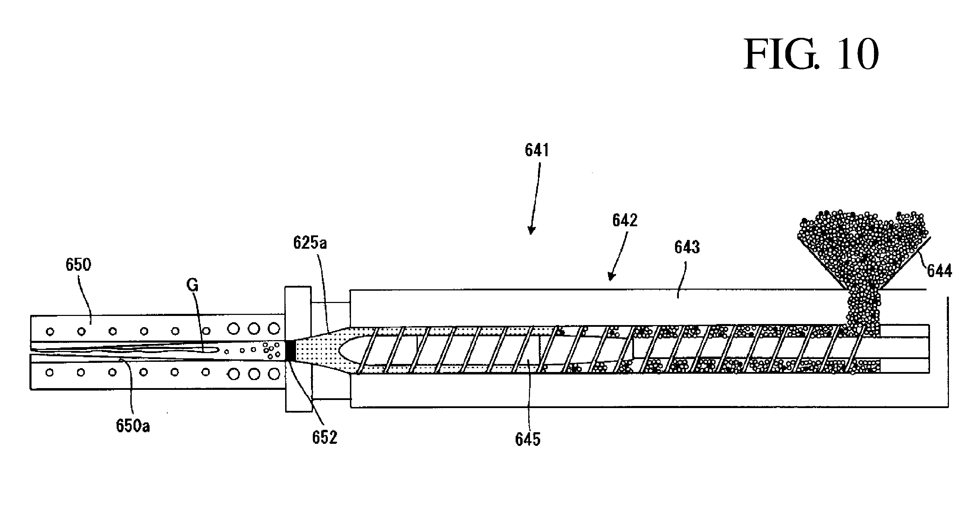

To overcome such a problem, the structure of the extrusion apparatus 641 may be changed. For example, as shown in Fig. 10, an attempt was made to place a breaker plate 652 serving as a screen composed of a plurality of meshes at the inlet portion of the die 650 and to apply resistance to the molding material 625a by pushing the molding material 625a into the molding chamber 650a of the die 650 through the meshes of the breaker plate 652. By doing so, the internal pressure in the barrel 643 was increased to suppress the inflation of foaming gases in the barrel 643 so that the dispersion state of the foaming gases in the barrel 643 of the extruder 642 was made uniform, and subsequently the molding material 625a was introduced into the die 650.

However, even when the foamed synthetic wood product was formed using the extrusion apparatus 641 with such a structure, bubbles could not be prevented from collecting in the center (core) of the foam-molded product formed in the molding chamber 650a, just like the case in which the known extrusion apparatus 641 shown in Fig. 8 was used. Thus, it was not possible to prevent the internal void G shown in Fig. 9 from occurring, making it difficult to obtain a foamed synthetic wood product with high strength.

As described above, when a high-quality, defect-free foamed synthetic wood product is to be obtained by extrusion molding, not only do the flow of the molding material 625a and the diffusion of foaming gases in the molding material 625a need to be made uniform during extrusion molding, but also the molding material 625a needs to be inflated by the foaming gases at the proper timing. However, performing such control perfectly is difficult merely by changing the structure of the extrusion apparatus.

In light of these circumstances, the present invention is intended to solve the problems with the above-described conventional technique, and an object thereof is to provide a molding material for extrusion foam molding that is capable of manufacturing a high-quality foamed synthetic wood product by analyzing the composition of the raw materials.

Another object of the present invention is to provide a high-quality, defect-free foamed synthetic wood product manufactured with the above-described molding material.

Still another object of the present invention is to provide an extrusion apparatus and an extrusion method suitable for performing extrusion foam molding with the above-described molding material for extrusion foam molding.

Means for Solving the Problems

The means for solving the problems will now be described with reference to the numerals used in Best Mode for Carrying Out the Invention. These reference numerals are intended to clarify the correspondence between the descriptions in the claims and the descriptions in Best Mode for Carrying Out the Invention, and it is needless to say that these reference numerals are not used to restrictively interpret the technical scope of the claims of the present invention.

In order to solve the above problems, a molding material for extrusion foam molding having a foaming agent added thereto to manufacture a foamed synthetic wood product through extrusion foam molding according to the present invention is characterized by comprising:

wood meal and thermoplastic resin as main ingredients, and 1-5 wt% of alkane with a molecular weight of 300 to 1000 g/mol.

The molding material may be melt-kneaded such that constituents are uniformly dispersed, and may be granulated into pellets with a predetermined grain size.

For the molding material, a compounding ratio between the wood meal and the thermoplastic resin may be 50-55 wt% of wood meal to 45-50 wt% of resin.

In addition to wood meal, thermoplastic resin and alkane as described above, the molding material may further comprise a filler and/or a reinforcing agent and/or a pigment.

The present invention also relates to a foamed synthetic wood product obtained by extruding any of the above molding materials and the foaming agent into a predetermined shape using an extrusion apparatus, and to a method for manufacturing the foamed synthetic wood product.

A method for manufacturing the foamed synthetic wood product is characterized by comprising the steps of:

introducing any of the above molding material and a foaming agent into a screw extruder 12 provided in an extrusion apparatus 11 and melt-kneading the molding material and the foaming agent at a temperature equal to or higher than a decomposition temperature of the foaming agent;

introducing the molding material 25a extruded by the extruder 12 into a molding chamber 31 of a molding die 30 while maintaining the molding material 25a in a pressurized state; and

releasing the pressure of the molding material 25a when introduced into the molding chamber 31 of the molding die 30 to foam the molding material 25a and cooling and solidifying the molding material 25a passing through the molding chamber 31 of the molding die 30 while forming the molding material 25a into a shape corresponding to a cross-sectional shape of the molding chamber 31.

The method for manufacturing the foamed synthetic wood product may comprise the steps of:

providing an extrusion die 20 that communicates from an outlet of the extruder 12 (an outlet 13a of a barrel 13) to an inlet 30a of the molding die 30 between the extruder 12 and the molding die 30 of the extrusion apparatus 11;

applying resistance to the molding material 25a introduced from the outlet 13a of the extruder 12 into the extrusion die 20 to increase the pressure of the molding material 25a in the extruder 12;

introducing the molding material 25a into the molding chamber 31 of the molding die 30 while maintaining the pressure of the molding material 25a introduced from the extruder 12 into the extrusion die 20 by decreasing a flow passage area of the extrusion die 20 from an inlet 20a towards an outlet 20b of the extrusion die 20; and

releasing the pressure of the molding material 25a passing through the extrusion die 20 upon passing through the outlet 20b of the extrusion die 20 to foam the molding material 25a at the inlet 30a of the molding die 30.

Furthermore, the extrusion apparatus for manufacturing a foamed synthetic wood product according to the above method is characterized by comprising:

a screw extruder 12 that receives a molding material containing thermoplastic resin and wood meal as main ingredients and a foaming agent, and melt-kneads the molding material at a temperature equal to or higher than a decomposition temperature of the foaming agent;

an extrusion die 20 that communicates with an outlet 13a of the extruder 12 and receives the molding material extruded by the extruder 12; and

a molding die 30 that communicates with an outlet 20b of the extrusion die 20 and introduces the molding material 25a passing through the extrusion die 20 into an internally formed molding chamber 31, and cools and solidifies the molding material 25a moving in the molding chamber 31 while forming the molding material 25a into a shape corresponding to an internal shape of the molding chamber 31,

a mesh-shaped breaker plate 22 that is provided at the outlet 13a of the extruder 12 and has many holes, and

a resistor body 26 that is provided in the extrusion die 20 and decreases a flow passage area in the extrusion die 20 from an inlet 20a towards the outlet 20b of the extrusion die 20.

Preferably, the flow passage area in the outlet of the extrusion die is smaller than the area of an inlet of the molding die.

Furthermore, for the extrusion apparatus 11 for a foamed synthetic wood product, the outlet 20b of the extrusion die 20 may be formed to have the same shape as the shape of an inlet 30a of the molding chamber 31 of the molding die 30, and

an end portion at the molding die side (mandrel section 26c) of the resistor body 26 may be formed to have a cross-sectional shape similar to and slightly smaller than a shape of the outlet 20b of the extrusion die and is disposed at a center position in the outlet 20b of the extrusion die 20.

For the extrusion apparatus 11 for a foamed synthetic wood product, the screw extruder may be a biaxial extruder.

Preferably, the MFR (melt flow rate) of the thermoplastic resin ranges from 0.5 to 10 (g/10 minutes).

The thermoplastic resin may be one or a mixture of polypropylene (PP), polyethylene (PE), acrylonitrile butadiene styrene resin, and vinyl chloride (PVC).

Effect of the Invention

With the structure described above, the invention according to this application could provide the following notable advantages.

A high-quality foamed synthetic wood product could be manufactured by employing a molding material for extrusion foam molding that contains wood meal and thermoplastic resin as main ingredients and also contains 1-5 wt% of alkane with a molecular weight of 300 to 1000 g/mol when extrusion foam molding was performed using the extrusion apparatus 11.

In other words, as a result of the above-described alkane being added, not only could mixing and dissolution of foaming gases to the thermoplastic resin be promoted but also absorption of foaming gases into the wood meal could be suppressed when the mixed material in the barrel 13 of the extruder 12 was melt-kneaded, thereby allowing the foaming gases to be uniformly dispersed in the molding material.

Furthermore, as a result of the alkane being added, the contact resistance between the metal surface and the molding material could be decreased, and the molding material in which the foaming gases were dispersed uniformly could be moved smoothly. Consequently, the molding material 25a could be introduced into the molding die 30 while the foaming gases remained uniformly dispersed.

Moreover, as a result of the alkane being added, the foaming gases absorbed into the thermoplastic resin could be prevented from starting to swell until the pressure of the molding material 25a was released, and thus the molding material 25a could be prevented from starting to foam before being introduced into the molding die 30.

Consequently, the internal bubbles were generated uniformly during extrusion foam molding using the above-described molding material, which allowed not only a high-quality foamed synthetic wood product to be manufactured but also the productivity of extrusion molding to increase.

When the molding material was in the form of pellets produced by melt-kneading the constituents into a uniformly dispersed state and subsequently granulating them into a predetermined grain size, it was possible to handle the molding material easily and make the working environment less contaminated than in a case where the constituents in the form of, for example, powder were handled individually.

Furthermore, because the constituents, except the foaming agent, were melt-kneaded in advance in a uniformly dispersed state, the constituents in a uniformly melt-kneaded state without unevenness among the constituents could be achieved more easily during melt-kneading in the extruder 12.

When the compounding ratio between the wood meal and the thermoplastic resin was 50-55 wt% of wood meal to 45-50 wt% of resin, the effect brought about by adding the above-described alkane could be achieved reliably.

Furthermore, uniform dispersion of the constituents could be achieved more easily during melt-kneading using the extruder 12 by pre-adding a filler, reinforcing agent, and pigment to the molding material and particularly by melt-kneading these raw materials in advance for forming pellets.

In a method for manufacturing a foamed synthetic wood product using the above-described molding material, when the molding material 25a flowing in the extrusion die 20 was kept pressurized by applying resistance to the molding material 25a at the outlet 13a of the extruder 12 to increase the pressure of the molding material 25a in the extruder 12 and by making the flow passage area of the extrusion die 20 smaller from the inlet 20a towards the outlet 20b of the extrusion die 20, it was possible to take full advantage of the effect of preventing pre-foaming brought about by adding the alkane that works to suppress the foaming of the molding material 25a in a pressurized state.

As a result, the foaming gases in the extruder 12 and the extrusion die 20 could be dispersed uniformly, and also the rate of extrusion (weight) of the molding material 25a could be increased to enhance the productivity.

Furthermore, in the apparatus for manufacturing foamed synthetic wood products having the breaker plate 22 at the outlet 13a of the extruder 12 and the resistor body 26 in the extrusion die 20, the pressure of the molding material 25a in the barrel 13 of the extruder 12 could be increased, and the pressure in the extrusion die 20 could be maintained reliably. Because of this, it was possible to take full advantage of the effects brought about by adding alkane, such as enhanced dispensability of the foaming gases and prevention of pre-foaming.

In particular, with the structure in which the outlet of the extrusion die was made to have the same shape as that of the inlet of the molding chamber of the molding die and the end portion (mandrel section 26c) at the molding die 30 side of the resistor body 26 was made to have a shape similar to but slightly smaller than the shape of the outlet 20b of the extrusion die 20 and also was disposed in the center of the outlet 20b of the extrusion die 20, dispersion of the foaming gases in the molding material 25b passing through the narrow space formed between them could be made more uniform, thereby allowing the bubbles in the foamed synthetic wood product to be distributed more uniformly due to a synergetic effect with the effect of the alkane.

In the extrusion apparatus 11 for foamed synthetic wood products employing a biaxial extruder as the screw extruder 12, the dispersion of the constituents could be made even more uniform along with melt-kneading of the molding material in the extruder 12, and mixing and dissolution of the foaming gases to the thermoplastic resin could be further accelerated due to the addition of the alkane.

Brief Description of the Drawings

Fig. 1 is an illustration of a pellet manufacturing apparatus used to manufacture a molding material according to the present invention;

Fig. 2 is an illustration of an extrusion apparatus used to apply extrusion foam molding of the molding material according to the present invention;

Fig. 3(A) is a vertical cross-sectional view, and (B) is a horizontal cross-sectional view of an extrusion die;

Fig. 4(A) is a front elevational view of a breaker plate, and (B) is a cross-sectional view taken along line B-B in (A);

Fig. 5(A) is a plan view, (B) is a side elevational view, and (C) is a front elevational view of a resistor body;

Fig. 6(A) is a vertical cross-sectional view, and (B) is a horizontal cross-sectional view of a molding die (first molding die);

Fig. 7 is an illustration for a method of testing bending strength;

Fig. 8 is an illustration of a conventional extrusion apparatus;

Fig. 9 is an illustration of a void and warpage occurring in a foamed synthetic wood product; and

Fig. 10 is an illustration of an extrusion apparatus provided with a breaker plate.

Best Mode for Carrying Out the Invention

Molding material for extrusion foam molding

The molding material for extrusion foam molding according to the present invention is used as a molding material for producing, for example, a plate-shaped synthetic wood product in a foamed state (foamed synthetic wood product) by extrusion molding and, when used with an additional foaming agent during extrusion molding, allows a homogeneous foamed synthetic wood product which was conventionally regarded as impossible or difficult to manufacture, to be manufactured with an extrusion apparatus.

This molding material for extrusion foam molding (hereinafter, referred to simply as the "molding material") is prepared by mixing alkane ($C_nH_{2n+2}$) having a molecular weight of 300 to 1000 g/mol, preferably 350 to 800 g/mol, or more preferably 400 to 600 g/mol with wood meal and thermoplastic resin serving as the main ingredients such that the alkane accounts for 1 to 5 wt% of the total amount.

Besides the above-described wood meal, thermoplastic resin, and alkane, a filler such as talc, a coloring pigment, a reinforcing agent, and other secondary materials may be added to this molding material.

Thermoplastic resin

For the thermoplastic resin which is one of the main ingredients constituting the molding material, various types of thermoplastic resins, including polypropylene (PP), polyethylene (PE), acrylonitrile butadiene styrene resin, and vinyl chloride, can be used.

In addition, not only can a single type of these thermoplastic resins be used, but also multiple different types of these thermoplastic resins can be used in combination. For example, waste plastic containing a plural types of thermoplastic resins can be collected for use as a raw material. In this embodiment, however, from among the above-described various types of thermoplastic resins, polypropylene (PP) is used.

Here, the types of polypropylene (PP) include homopolymer, random copolymer, and block copolymer. In the present invention, any of these types of polypropylene can be used. For example, polypropylene collected in accordance with the Containers/Packaging Recycling Act (so-called "CPR Act"), polypropylene containing different types of polypropylene, and so forth can be used.

The thermoplastic resin used in the present invention should preferably have an MFR (melt flow rate) of 0.5 to 10 (g/10 min); for example, a plurality of thermoplastic resins with different MFRs may be mixed to produce a resin with an MFR falling within the above-described range of values.

Wood meal

For the wood meal which is another of the main ingredients constituting the molding material, various types of commercially available wood meal can be used. Alternatively, wood meal may be prepared by crushing unused wood, used waste building materials, waste materials, such as sawdust generated during wood processing, and so forth by using a tool such as a crusher, cutter, or mill.

The type of the wood to be used is not particularly limited, and combined use of a plurality of types of wood will not pose any structural problem. However, it is preferable to use wood types with some consistent coloring, taking into consideration the finish of the finally obtained foamed synthetic wood product.

For the wood meal to be used, any type of wood meal with a grain size of 1000 $\mu$m or less can be used. Wood meal with a grain size of 150 to 200 $\mu$m is preferably used.

The wood meal is preferably dried before being mixed with the other raw materials in order to enhance the affinity with the thermoplastic resin and prevent moisture vapor from being released at the time of heat-kneading. Dried wood meal with a water content of 1 wt% or less is preferably used.

A preferable compounding ratio between this wood meal and the above-described thermoplastic resin is 50-55 wt%/45-50 wt% in terms of wood meal/thermoplastic resin.

Alkane

For the alkane ($C_nH_{2n+2}$) to be added to the molding material according to the present invention, various types of alkanes can be used as long as their molecular weights range from 300 to 1000 g/mol. Alkane with a molecular weight of less than 300 g/mol has a low melting point and boiling point and is difficult to handle. On the other hand, alkane with a molecular weight of more than 1000 g/mol cannot produce a desired effect, as is apparent from the experimental results shown later. In other words, alkane is almost fluid and exhibits a lower boiling point (50 °C or less) when below the lower limit 300 g/mol and is petroleum wax (solid) when above 300 g/mol. When in the form of a fluid, alkane exhibits low dispersibility in the resin (PP) and deposits on the surface, hindering the intended effect from being brought about.

The molecular weight of alkane to be added ranges preferably from 350 to 800 g/mol and more preferably from 400 to 600 g/mol.

This alkane is added in an amount of 1 to 5 wt% relative to the total amount of the produced molding material. If the amount of alkane is less than 1 wt%, it does not produce any effect, whereas if the amount of alkane is more than 5 wt%, it will surface, decreasing the foaming rate.

Other added materials

Besides the above-described wood meal, thermoplastic resin, and alkane, a filler such as talc, a coloring pigment, a reinforcing agent, and so forth in an amount of approximately 5 to 30 wt% relative to the total amount can be added to the above-described molding material.

Talc, given as an example of a filler, is added to enhance the strength of the finally obtained synthetic wood board and can be added in an amount of 5 to 25 wt% of the total weight of the molding material. If a smaller amount of talc than this is added, the strength cannot be enhanced. On the other hand, if too much talc is added, the wood board will become fragile and its strength will decrease.

The talc to be added can have a relatively wide range of grain sizes. The average grain size of the talc preferably ranges from about 5 to 30 $\mu$m.

A pigment is added to color the finally obtained synthetic wood board. According to the intended color of the final product, various types of pigments can be added at various compounding ratios.

In this embodiment in which a silver oxide-based pigment is used to apply brownish coloring as one example, a pigment was added in an amount of about 3 wt% of the total amount of the molding material.

Furthermore, a reinforcing agent can also be added as an additive. In this embodiment in which polypropylene is used for the thermoplastic resin, serving as a main raw material as described above, maleic modified polypropylene is added as the reinforcing agent to enhance the coupling between the wood meal and the resin.

This reinforcing agent does not produce any effect if its added amount is too small, and the larger the amount of this reinforcing agent, the more significant its effect, though the higher the cost. Thus, this reinforcing agent is added preferably in, for example, an amount of about 0.3 to 2.0 wt% of the total amount of the obtained molding material.

Manufacturing the molding material

The wood meal, thermoplastic resin, and alkane constituting the above-described molding material, as well as the filler such as talc, pigment, and reinforcing agent added as required, are preferably pre-stirred uniformly to be in the form of a mixed material. More preferably, these constituent materials are melt-kneaded in advance while being heated so that the constituents are dispersed uniformly, and subsequently, the kneaded material produced through melt-kneading is granulated into pellets with a predetermined grain size.

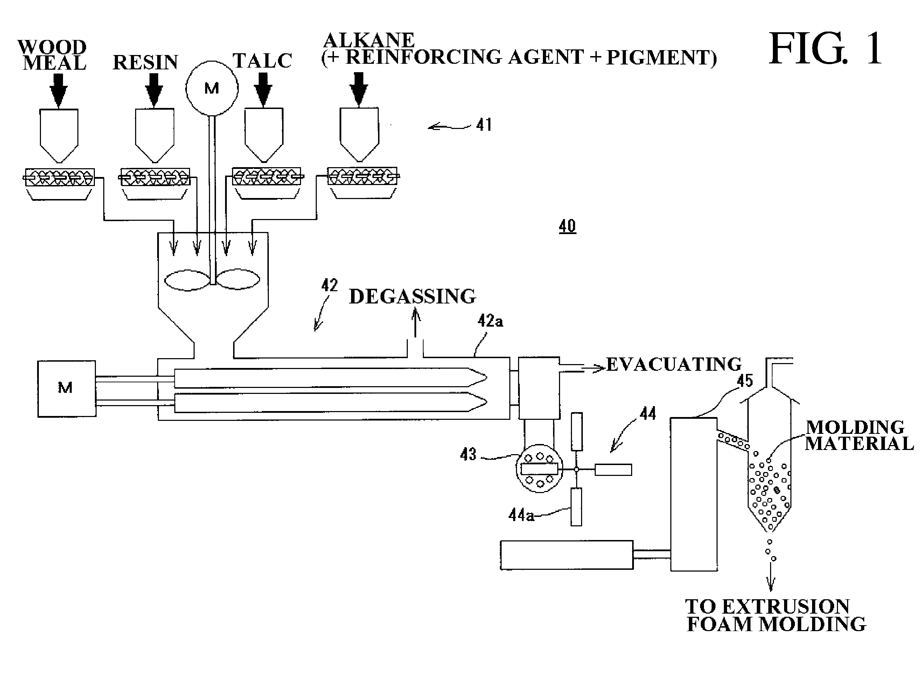

Production of pellets through melt-kneading of the molding material in this manner can be performed using a known granulating machine, such as a pelletizer or a Henschel mixer. For example, a pellet manufacturing apparatus 40 shown in Fig. 1 was used in this embodiment.

The pellet manufacturing apparatus 40 shown in Fig. 1 includes a constant-amount supply apparatus 41 for supplying a constant amount of the constituents of the molding material by, for example, the loss-in-weight method; and a screw extruder 42 for melt-kneading the constant amount of raw materials supplied by the constant-amount supply apparatus 41 at a temperature of about 170 to 180 °C and extruding them. Pellets are manufactured by the underwater hot-cut method, in which a die nozzle 43 having many small holes formed therein is mounted at the front end of a barrel 42a of this extruder 42, the melted materials (strands) are extruded in the shape of a round cord into hot water through this die nozzle 43, and these strands are cut at intervals of a predetermined length with a cutter blade 44a of a cutter 44.

For this extruder 42, various known types of extruders can be used. Preferably, a biaxial extruder is used.

A biaxial extruder is an extruder including two screws that rotate by means of the alternate screw threads and grooves being engaged with each other. In this embodiment, an extruder in which the two screws rotate in different directions is used.

The biaxial extruder is highly advantageous in dispersing the raw materials because of its features of high extrusion force due to the engagement structure of the screws and a specific kneading effect due to the engagement of the screws. Furthermore, the biaxial extruder can prevent the temperature of the materials from increasing due to friction because it is capable of producing a necessary extrusion force even with a low rotational frequency, making it easy to control the temperature of the materials with, for example, a heater (not shown in the figure) provided around the outer circumference of the barrel of the extruder. Therefore, the biaxial screw can suitably manufacture pellets.

The pellets of the molding material produced in this manner are dehydrated with a centrifuge 45, and the dehydrated pellets are collected and used as the molding material for the foamed synthetic wood product described below.

Manufacturing a foamed synthetic wood product

Drying the molding material (pellets)

The molding material for extrusion foam molding that has been obtained as described above is subjected to extrusion foam molding together with the foaming agent and turns into a foamed synthetic wood product of a predetermined shape.

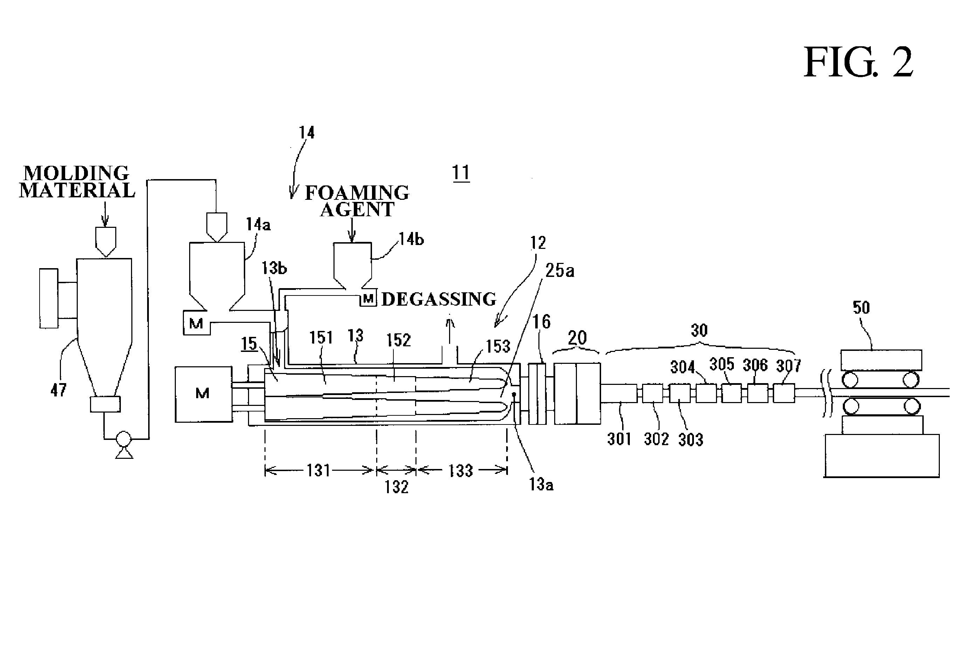

Before such foam-molding is performed, the manufactured pellets of the molding material are dried sufficiently as required using, for example, a dryer 47, as shown in Fig. 2.

It is preferable that the pellets be dried until a moisture content of 0.2 wt% or less is reached. Although the drying method is not particularly limited, in this embodiment, for example, the pellets were dried for more than two hours using a hot dryer at a temperature of 120 °C until the above-described moisture content was reached.

Foaming agent

Foaming agents are classified into normally volatile foaming agents (gaseous), such as $CO_2$, $N_2$, chlorofluorocarbon, and propane, including volatile foaming agents in the form of either gas or liquid, and degradable foaming agents. Either type of foaming agent, including various types of commercially available foaming agents can be used. In this embodiment, a degradable foaming agent is used.

Degradable foaming agents include nonorganic compounds, azo compounds, sulfonyl hydrazide compounds, nitroso compounds, azide compounds, and so forth. Any type of these foaming agents can be used as long as it readily disperses or dissolves in the thermoplastic resin serving as a main raw material of the molding material, and does not stain the obtained wood foam-molded product with unwanted color etc.

Furthermore, pellet-shaped foaming agents prepared by heavily adding a foaming agent to a carrier resin, a so-called "master batch," are also commercially available and can be used.

In this embodiment, a master batch containing PE as a carrier resin and sodium bicarbonate belonging to nonorganic compounds as a foaming agent was used.

The foaming agent to be used is added in the required amount, according to the volume of gas generated thereby, the extent of foaming of the foam-molded product to be manufactured, and so forth. For example, the added amount of the foaming agent (master batch) in this embodiment is preferably 0.3 to 3 wt%, relative to the total amount of the molding material and the foaming agent as 100 wt%.

The molding material having the foaming agent added thereto in this manner is then continuously introduced into a screw extruder 12 provided in an extrusion apparatus 11 and is melt-kneaded while being heated. A molding material 25a extruded by this extruder 12 is introduced into an extrusion die 20 and then into a molding die 30, continuous with this extrusion die 20, which forms the molding material into a predetermined shape. The material formed into a predetermined shape is cooled and solidified to produce a foamed synthetic wood product of a desired shape.

Extrusion apparatus

Various types of apparatuses can be employed as an extrusion apparatus used to manufacture the foamed synthetic wood product. For example, the known extrusion apparatus described with reference to Fig. 8 or the extrusion apparatus as an improved version, described with reference to Fig. 10 can be used.

In order to take full advantage of the effects of enhancing the dispersibility of foaming gases and preventing pre-foaming before introduction into the molding die 30, which are brought about as a result of adding alkane, it is preferable that the extrusion apparatus 11 with the following structure be used: i.e., a structure in which the pressure of the molding material 25a in the extruder 12 can be increased, the molding material 25a can be introduced from the extruder 12 into the molding die 30 while its pressure is maintained, and the pressure of the molding material 25a can be quickly released in the molding die 30.

An example structure of the extrusion apparatus 11 suitable for extrusion molding using the molding material according to the present invention will be described with reference to Figs. 2 to 6.

The extrusion apparatus 11 shown in Fig. 2 includes a constant-amount supply apparatus 14 that supplies the pellets of the molding material obtained in the above-described process and a foaming agent in the form of a master batch in respective constant amounts; the screw extruder 12 that melt-kneads and extrudes the pellets of the molding material and the foaming agent supplied through this constant-amount supply apparatus 14; the extrusion die 20 that receives the extrusion material 25a extruded by the above-described extruder 12; the molding die 30 that forms the molding material 25a that has passed through the above-described extrusion die 20 into a predetermined shape and cools and hardens this molding material; and a winder 50 that collects the extrusion material (foamed synthetic wood product) that has been cooled and solidified after having passed through the molding die 30.

Constant-amount supply apparatus

The above-described constant-amount supply apparatus 14 includes a molding-material feeder 14a that supplies the pellets of the molding material according to the present invention obtained as described above to the extruder 12 in a constant amount at a time; and a foaming-agent feeder 14b that merges the foaming agent in the form of a master batch according to this embodiment with pellets of the molding material fed towards the extruder 12 by this molding-material feeder 14a in a constant amount at a time. After the pellets of the molding material and the foaming agent are delivered into the hoppers provided in the above-described feeders 14a and 14b, respectively, the pellets of the molding material and the foaming agent can be supplied to the extruder 12 at a predetermined compounding ratio through the rotation of feed screws driven by motors M provided below these hoppers.

Extruder

The extruder 12 into which the molding material and the foaming agent are delivered in this manner is of a screw type provided with screws 15 which heat-knead and melt-plasticize the mixture of the pellets of the molding material and the foaming agent and then extrude this melt-plasticized molding material 25a. Although this embodiment is described by way of an example where the biaxial screw extruder 12 is employed as the extrusion apparatus 11, various types of screw extruders can be used, such as a uniaxial screw extruder, a multiaxial extruder, or a screw extruder with these types in combination.

The biaxial screw extruder is highly advantageous in dispersing the raw materials because of its features of high extrusion force due to the engagement structure of the screws 15 and a specific kneading effect, as described above. Furthermore, the biaxial screw extruder can prevent the temperature of materials from increasing due to friction because it is capable of producing a necessary extrusion force even with a low rotational frequency, making it easy to control the temperature of the materials with, for example, a heater (not shown in the figure) provided on the outer circumference of a barrel 13 of the extruder 12. Therefore, a biaxial screw extruder is preferably used as the extruder 12 of the extrusion apparatus 11.

The biaxial screw extruder 12 shown in Fig. 2 includes the barrel 13; the pair of screws 15 rotably provided in the barrel 13; and a driving source M composed of a speed reducer, a motor, and so forth, that rotationally drives the screws 15. Furthermore, the extrusion die 20 and molding die 30 described later are provided at the front end of the barrel 13 (front in the extrusion direction, or right-hand side on the drawing of Fig. 2).

The barrel 13 is formed in a tubular shape whose front end in the extrusion direction is open to form an outlet 13a and whose rear end (rear in the extrusion direction, or left-hand side on the drawing of Fig. 2) is closed. A delivery inlet 13b through which the raw materials are delivered and that penetrates through the barrel 13 is provided at the upper portion of the rear end. Through this delivery inlet 13b, the mixed material of the molding material and the foaming agent are delivered by the above-described constant-amount supply apparatus 14.

At the outer circumferential portion of the barrel 13, heating means (not shown in the figure) such as a band heater is provided over the entire length of the barrel 13 so as to wind around or surround the barrel 13, and the mixed material supplied into the barrel 13 is heated by this heating means.

The barrel 13 is divided into a plurality of zones (e.g., a melt zone 131, a foaming-agent decomposing zone 132, a foaming-gas mixing zone 133) along its entire length and is constructed such that the zones 131 to 133 can be temperature-controlled individually with the heating means.

Each of the screws 15 includes a round-bar-shaped revolving shaft; and a screw constituting the thread portion thereof such that the screw is integrally and helically provided around this revolving shaft. The revolving shaft provided at the rear end (left-hand side on the drawing of Fig. 2) of each screw 15 protrudes backwards from the rear end of the barrel 13, and the protrusion is linked to the motor M serving as a driving source. The screws 15 are a biaxial conical screw with a shape tapering towards its front end and are rotated by the driving source, with an angled screw threads and screw grooves formed thereon engaging with each other symmetrically.

The area where the screws 15 are located in the barrel 13 is defined by a melt-kneading section 151 located in the melt zone 131 to melt-knead the heated raw materials; a decomposition-promoting section 152 located in the foaming-agent decomposing zone 132 to promote the decomposition of the foaming agent; and a dispersion-promoting section 153 located in the foaming-gas mixing zone 133 to promote the dispersion of the foaming gas. The screw teeth in the individual sections have the respective shapes suitable for their individual functions.

When the screws 15 are rotationally driven through the operation of the driving source M, the mixed material supplied into the barrel 13 through the constant-amount supply apparatus 14 is pressure-fed along the groove between the screw portions of the screws 15 towards the front end of the screws 15 while being heat-kneaded and turns into the melt-plasticized molding material 25a, which is then extruded from the front ends of the screws 15 out of the barrel 13 by the extrusion force applied thereto.

As a porous material, the wood meal contained in the molding material more easily absorbs foaming gases generated by decomposition of the foaming agent than the resin material does.

On the other hand, when the wood meal absorbs foaming gases, the amount of foaming gases absorbed into the melted resin becomes insufficient, and bubbles will not easily form at the resin portion, thus decreasing the extent of foaming of the finally produced foamed synthetic wood product.

However, when using the molding material according to the present invention, which contains the above-described amount of alkane with the above-described molecular weight, this alkane promotes foaming gases generated by decomposition of the foaming agent to mix with and dissolve into the thermoplastic resin while suppressing absorption of the foaming gases into the wood meal in the foaming-gas mixing zone 133.

Extrusion die

The extrusion die 20, which introduces the molding material 25a extruded from the barrel 13 of the extruder 12 into the molding die 30 described later while keeping the molding material 25a pressurized, is detachably fastened with, for example, a bolt through an adapter 16 at the front end of the barrel 13 of the extruder 12.

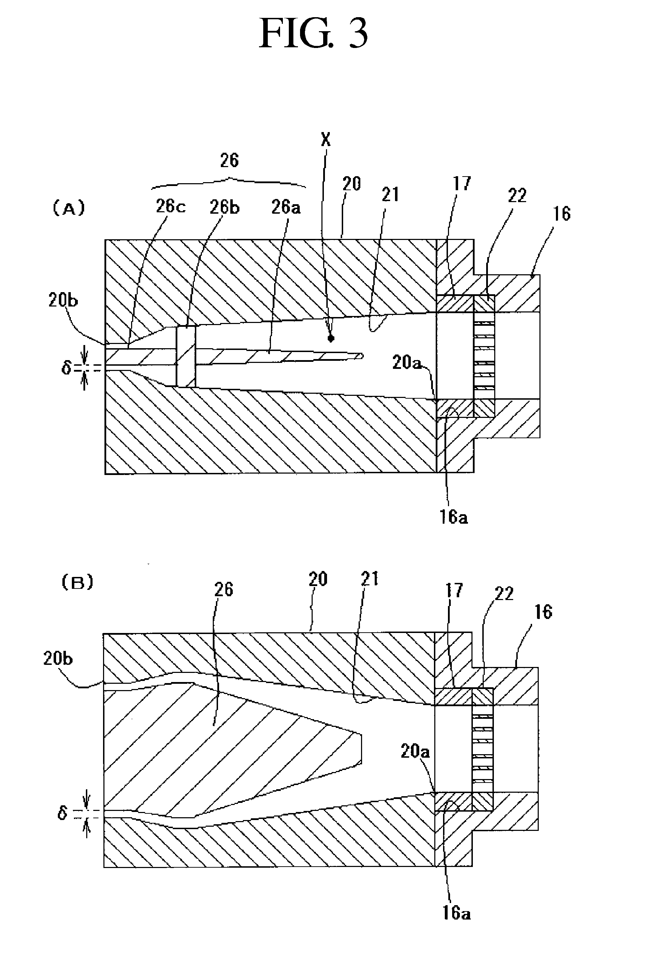

This extrusion die 20 includes an inlet 20a with a shape according to the shape of the outlet 13a of the barrel 13 of the above-described extruder 12 and an outlet 20b with a shape according to the shape of an inlet 30a of the molding die 30 described later. As shown in Figs. 3(A) and (B), the vertical width of a flow channel 21 in vertical cross section (refer to Fig. 3 (A)) decreases from the inlet 20a towards the outlet 20b; and furthermore, the width of the flow channel 21 in horizontal cross section (refer to Fig. 3(B)) gradually increases from the inlet 20a towards the outlet 20b, slightly decreases near the outlet 20b, and becomes equivalent to the width of the inlet 30a of the molding die 30 described later. In this manner, the outlet 13a of the barrel 13 of the extruder 12 can communicate with the inlet 30a of the molding die 30.

A breaker plate 22 is fitted in the above-described adapter 16 provided at the inlet 20a side of this extrusion die 20, and furthermore, a resistor body 26 that apples resistance to the molding material 25a flowing in this flow channel 21 and rectifies the flow of the molding material 25a is disposed in the flow channel 21 of the extrusion die 20.

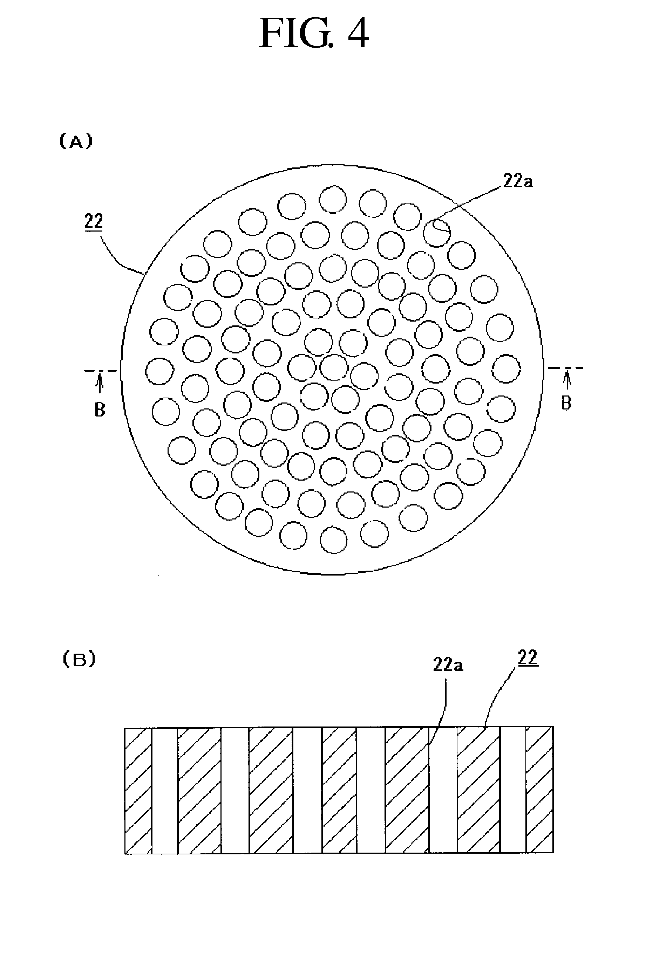

Among others, the breaker plate 22 is shaped like a disc composed of small holes 22a in the form of a mesh, as shown in Figs. 4(A) and (B).

In order to allow the above-described breaker plate 22 to be fitted in the adapter 16, a mounting hole 16a with a diameter substantially equivalent to that of the outer circumference of the breaker plate 22, is formed in the adapter 16 so as to extend from the end surface of the adapter 16 at the extrusion die 20 side towards the extruder 12. The above-described breaker plate 22 is inserted into this mounting hole 16a from the extrusion die 20 side, and furthermore, a retaining ring 17 is inserted into this mounting hole 16a from the extrusion die 20 side so that the breaker plate 22 is mounted at a predetermined position in the adapter 16.

Thus, in the example shown in the figures, the small holes 22a of this breaker plate 22 and the inner circumference of the above-described retaining ring 17 form part of the flow channel for the molding material 25a in the adapter 16.

Because the breaker plate 22 is mounted in this manner between the outlet 13a of the extruder 12 and the inlet 20a of the extrusion die 20, the molding material 25a extruded from the extruder 12 is introduced into the extrusion die 20 after passing through the small holes 22a formed in the breaker plate 22. Because the extrusion material 25a to be extruded by the extruder 12 is met with resistance when passing through the small holes 22a formed in this breaker plate 22, pressure can be applied to the molding material 25a in the barrel 13 of the extruder 12.

Furthermore, the above-described resistor body 26 formed in the flow channel 21 of the extrusion die 20 can keep the molding material 25a in the extrusion die 20 pressurized by applying resistance to the flow of the molding material 25a in the extrusion die 20. Because such a pressurized state is maintained, the molding material 25a is abruptly depressurized when passing through the extrusion die 20 into the molding die 30 described later, thereby making it easier for the molding material 25a to foam at the outlet 20b portion of the extrusion die 20 (the inlet 30a portion of the molding die 30).

In order to make such pressure release possible, as shown in Figs. 3(A) and (B) and

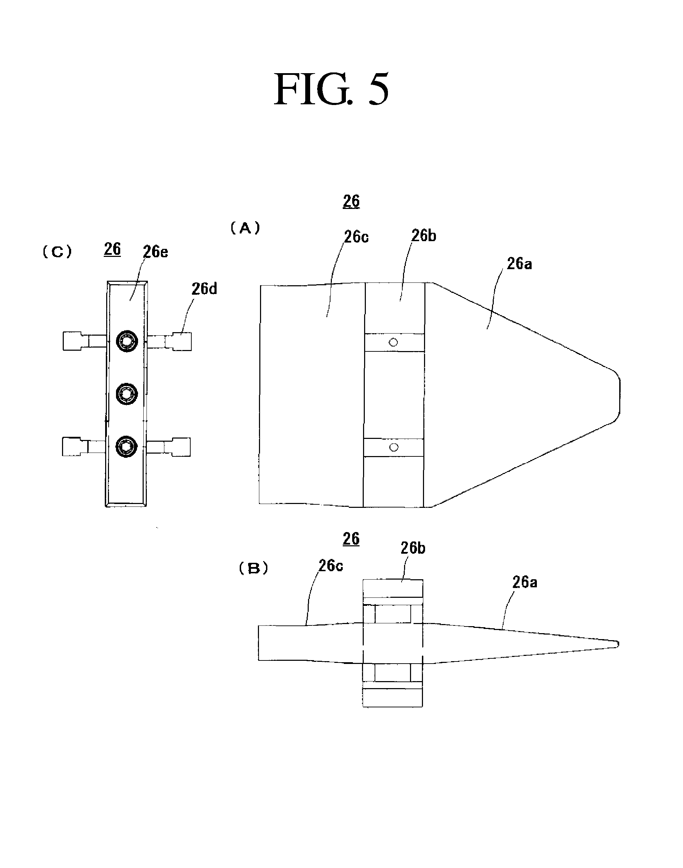

Figs. 5(A) to (C), the resistor body 26 includes a main body shaped like a cuboid formed by extending the end portion of a torpedo section 26a which is shaped like a tongue piece whose width and thickness gradually increase from the inlet 20a towards the outlet 20b of the extrusion die 20; a bridge section 26b provided with a rib 26d for fastening at a predetermined position in the extrusion die 20; and a mandrel section 26c that leads to the outlet 20b of the extrusion die 20 such that the thickness and width slightly decrease from the above-described bridge section 26b towards the outlet 20b of the extrusion die 20 and, are maintained constant from there onward.

The rectangle that constitutes the contour of an end face 26e (refer to Fig. 5(C)) of the mandrel section 26c at the outlet 20b side of the extrusion die 20 is similar in shape to and slightly smaller than the rectangle defined by the inner circumference of the outlet 20b of the extrusion die 20, and this mandrel section 26c is disposed in the center of the outlet 20b of the extrusion die 20, thereby allowing the molding material 25a to be introduced into the molding die 30 through the relatively narrow space δ (refer to Figs. 3(A) and (B)) formed between the inner wall of the outlet 20b of the extrusion die 20 and the outer circumference of the mandrel section 26c.

As described above, because the resistor body 26 including the torpedo section 26a, the bridge section 26b, and the mandrel section 26c is placed in the extrusion die 20, the molding material 25a passing through the extrusion die 20 flows along the inner wall of the flow channel 21 of the extrusion die 20 by means of the resistor body 26 and converges into a relatively thin flow when passing through the space between the inner circumference of the outlet 20b of the extrusion die 20 and the outer circumference of the mandrel section 26c, thereby promoting uniform dispersion of the foaming gases in the molding material 25a.

Because of this mandrel section 26c, the flow passage area in the outlet 20b of the extrusion die 20 having the same shape as that of the inlet 30a of the molding die 30 described later, is sufficiently small compared with the inlet 30a of the molding die 30. Therefore, the pressure of the molding material 25a introduced into the molding die 30 through the outlet 20b of the extrusion die 20 is abruptly released, and triggered by this release of pressure, the foaming gases in the molding material 25a abruptly start to inflate.

When the molding material passes through this extrusion die 20, the alkane added to the molding material brings about the effects of decreasing the resistance to the inner surface of the flow channel of the extrusion die 20 and homogenizing the molding material 25a for smooth flow, as well as maintaining the homogenized state.

The alkane also works to keep the foaming gases dissolved in the molding material 25a in the pressurized state as described above and to prevent the foaming gases from starting to inflate before pressure release at the time of introduction into the molding die 30 described later.

Molding die

As described above, the molding material 25a passing through the extrusion die 20 is introduced into the molding die 30, is formed into a predetermined shape defined by the shape of a molding chamber 31 formed in the molding die 30, and is then cooled and solidified into a foamed synthetic wood product.

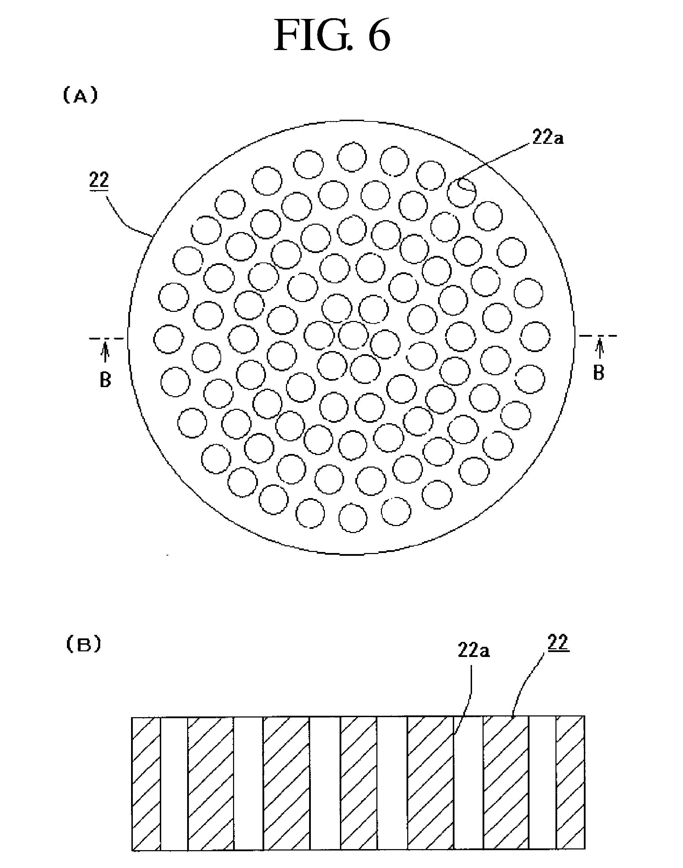

In this embodiment, this molding die 30 in the form of an aggregate of multiple dies as shown in Fig. 2, includes a first molding die 301 whose inlet 30a communicates with the outlet 20b of the extrusion die 20 (refer to Figs. 6(A) and (B)); a second molding die 302 disposed at the outlet side of this first molding die 301 spaced out at a predetermined interval; a third molding die 303 disposed at the outlet side of the second molding die 302 spaced out at a predetermined interval; and so on up to a seven molding die 307 in series in the case of the embodiment shown in the figure (refer to Fig. 2).

The molding chamber 31 of a cross-sectional shape corresponding to the shape of the outlet 20b of the above-described extrusion die 20 is formed in each of the individual molding dies 301 to 307, and in the case of this embodiment, a flow channel 32 for a cooling medium is provided in the wall thicknesses of the first to third molding dies 301 to 303. A cooling medium, such as cooling water, is introduced into this cooling medium flow channel 32, thereby allowing the temperature of the extrusion material 25a to gradually decrease as it flows from the first to third molding dies 301 to 303 so that the extrusion material 25a is solidified into a desired foam-molded product.

In this embodiment, no flow channels for cooling medium are provided in the wall thicknesses of the fourth to seventh molding dies 304 to 307.

When the molding material 25a from the extrusion die 20 is introduced into the first molding die 301 of the molding die 20 formed as described above, the molding material 25a extruded into the first molding die 301 is abruptly depressurized due to the structure of the above-described extrusion die 20, and foaming gases generated by the foaming agent decomposed during melt kneading in the extruder 12 abruptly inflate at this position to foam the molding material 25a.

The molding chamber 31 in the first molding die 301 is filled with the molding material 25a foamed as described above, and the molding material 25a is formed into a shape corresponding to the shape of the molding chamber 31 then cooled and solidified.

The molding material that has been molded, cooled, and formed into a foamed synthetic wood product in the first molding die 301 is taken off by the winder 50 through the first molding die 301 and is cooled as it travels from the second molding die 302, the third molding die 303, and so on up to the seventh molding die 307, in that order. Thus, the manufacturing of a foamed synthetic wood product is completed.

The alkane added to the molding material works to make the molding material or the foamed synthetic wood product more slidable against the inner wall of the molding chamber 31 of the molding die 30, thus maintaining the surface smoothness of the manufactured foamed synthetic wood product.

As a result, for example, wrinkles caused by the generation of an unstable flow, such as pulsation, of the molding material 25a resulting from foaming can be satisfactorily prevented from occurring on the surface of the foam-molded product.

[Examples]

Below are the results of a comparative experiment between manufactured examples (Examples 1 to 7) in which synthetic wood foamed products were manufactured using molding materials according to the present invention, as well as foamed synthetic wood products produced in these examples; and manufactured examples in which molding materials according to Comparative Examples (Comparative Examples 1 to 10) were used, as well as molded products produced in these comparative examples.

Purpose of experiment

To investigate the effect of whether or not to add alkane, the effect of variations of the molecular weight and amounts of added alkane on the molding performance for foamed synthetic wood products, physical properties of manufactured foamed synthetic wood products, and so forth, thereby finding the optimal range of molecular weights and amounts of added alkane.

Manufacturing conditions

Ingredients of the molding material

The ingredients of the molding materials used in the Examples and Comparative Examples are shown in Table 1.

[Table 1]

| Table of ingredients of molding materials in Examples and Comparative Examples | | | | | | | | |
|---|---|---|---|---|---|---|---|---|
| | Raw material (wt%) | | | | | | | |
| | Wood powder | Resin | | Talc | Pigment | Reinforcing agent | Alkane (molecular weight g/mol) | Foaming agent added? |
| | | PP | PE | | | | | |
| Example 1 | 44.2 | 39.7 | | 10.1 | 3 | 0.5 | 2.5 (900) | Yes |
| Example 2 | 44.2 | 39.7 | | 10.1 | 3 | 0.5 | 2.5 (470) | Yes |
| Example 3 | 44.6 | 39.8 | | 10.1 | 3 | 0.5 | 2.0 (900) | Yes |

(continued)

|  | Wood powder | Resin | | Talc | Pigment | Reinforcing agent | Alkane (molecular weight g/mol) | Foaming agent added? |
|---|---|---|---|---|---|---|---|---|
|  |  | PP | PE |  |  |  |  |  |
| Example 4 | 45.1 | 40.3 |  | 10.1 | 3 | 0.5 | 1.0 (470) | Yes |
| Example 5 | 44.6 | 39.8 |  | 10.1 | 3 | 0.5 | 2.0 (470) | Yes |
| Example 6 | 44.2 | 19.85 | 19.85 | 10.1 | 3 | 0.5 | 2.5 (900) | Yes |
| Example 7 | 44.2 | 19.85 | 19.85 | 10.1 | 3 | 0.5 | 2.5 (470) | Yes |
| Comparative Example 1 | 45.7 | 40.7 |  | 10.1 | 3 | 0.5 | ---------- | Yes |
| Comparative Example 2 | 44.2 | 39.7 |  | 10.1 | 3 | 0.5 | 2.5 (2000) | Yes |
| Comparative Example 3 | 44.2 | 39.7 |  | 10.1 | 3 | 0.5 | 2.5 (4000) | Yes |
| Comparative Example 4 | 45.3 | 40.6 |  | 10.1 | 3 | 0.5 | 0.5 (900) | Yes |
| Comparative Example 5 | 45.3 | 40.6 |  | 10.1 | 3 | 0.5 | 0.5 (470) | Yes |
| Comparative Example 6 | 44.5 | 39.5 |  | 10 | 3 | 0.5 | 2.5 (470) | No |
| Comparative Example 7 | 44.5 | 39.5 |  | 10 | 3 | 0.5 | 2.5 (4000) | No |
| Comparative Example 8 | 42.1 | 37.4 |  | 10 | 3 | 0.5 | 7.0 (470) | Yes |
| Comparative Example 9 | 44.2 | 19.85 | 19.85 | 10.1 | 3 | 0.5 | 2.5 (2000) | Yes |
| Comparative Example 10 | 44.2 | 19.85 | 19.85 | 10.1 | 3 | 0.5 | 0.5 (470) | Yes |

Among the above-described molding materials, the composition of the molding material in Comparative Example 6 is in fact categorized in the molding materials according to the present invention. However, it was described as included in "Comparative Example" because extrusion molding was carried out without adding a foaming agent to the molding materials in Comparative Examples 6 and 7, as described below.

In Comparative Examples 8 to 10, a foaming agent was added.

In Examples 1 to 5 and Comparative Examples 1 to 7 in Table 1, the wood meal "A-100" (grain size of 50 to 200 $\mu$m) manufactured by Kaneki Fuel Co., Ltd., and the resin was block PP (MFR = 5) produced by mixing OG PP (MFR = 1.0) and recycled bottle cap PP (MFR = 10.0) at a mixing ratio of 1:1.

PE used in Examples 6 and 7 and Comparative Examples 9 and 10 was high-density polyethylene (HDPE) "HY430" manufactured by Japan Polyethylene Corporation, with a mixing ratio of PP:PE = 1:1. In Examples 6 and 7, only the molecular weights of the alkane were made different. In Comparative Examples 9 and 10, the molecular weights and compounding ratios of the alkane were made different.

The talc was "SP-40" (average grain size of 23 $\mu$m) manufactured by Fuji Talc Industrial Co., Ltd.

The pigment was "Brown 710" (silver oxide series) manufactured by Toda Kogyo Corp.

The reinforcing agent was "Yumex 1010" (maleic acid-modified PP) manufactured by Sanyo Chemical Industries, Ltd.

The foaming agent was "Polythlene EE405F" (master batch including sodium bicarbonate added to carrier resin PE) manufactured by Eiwa Chemical Ind. Co., Ltd.

The alkane was:

Mitsui Chemicals, Inc., "Mitsui Hi-WAX 100P" in Examples 1, 3, and 6,
Nippon Seiro Co., Ltd., "155°F Wax" in Examples 2, 4, 5, and 7,
Mitsui Chemicals, Inc., "Mitsui Hi-WAX 200P" in Comparative Examples 2 and 9,
Mitsui Chemicals, Inc., "Mitsui Hi-WAX 410P" in Comparative Examples 3 and 7,
Mitsui Chemicals, Inc., "Mitsui Hi-WAX 100P" in Comparative Example 4, and
Nippon Seiro Co., Ltd., "155°F Wax" in Comparative Examples 5, 6, 8, and 10.

Pre-mixing conditions

The above-described raw materials were melt-kneaded and formed into pellets using the pellet manufacturing apparatus described with reference to Fig. 1.

The extruder was counter-rotating biaxial parallel screws ($\phi$ 65 mm). Melt kneading was carried out with this extruder at temperatures of 170 to 180 °C to extrude strands about 4 mm in diameter, which were then cut about every 6 mm by the underwater hot cutting method.

The pellets of the produced molding material were dehydrated with the centrifuge until a moisture content of 2% or less was reached.

Extrusion foam molding conditions

The pellets of the molding material that were produced through pre-kneading were extrusion-molded using the extrusion apparatus described with reference to Figs. 2 to 6.

In Examples 1 to 7 and Comparative Examples 1 to 5, "Polythlene EE405F" manufactured by Eiwa Chemical Ind. Co., Ltd. (master batch prepared by adding sodium bicarbonate to PE as a carrier resin) was added as the foaming agent in an amount of 0.5 wt% relative to the total weight including the molding material and the foaming agent, and then extrusion molding was carried out.

In Comparative Examples 6 and 7, extrusion molding was carried out with only pellets of the molding material, without adding a foaming agent.

In Comparative Example 8 to 10, a foaming agent was added.

The extruder used was an counter-rotating biaxial conical screw extruder "T-58" manufactured by Cincinnati Extrusion.

Before being delivered into the extruder, the pellets of the molding material obtained through pre-kneading were dried with a hot dryer at 120 °C for more than two hours until a moisture content of 0.2% or lower was achieved. Subsequently, the pellets of the molding material were delivered into the extruder together with the above-described foaming agent.

The extrusion temperatures (setting temperatures for the extruder through the extrusion die) were 180 to 190 °C, and the molding dies (first to third molding dies) had a water-cooled jacket at 90 °C.

In addition, during molding, the air vent provided in the barrel of the extruder was opened to the atmosphere, instead of evacuating through the air vent.

In this manner, foamed synthetic wood products formed into boards of 145 mm in width and 25 mm in thickness were manufactured sequentially in the length direction.

Measurement and observations

Measurement related to changes in the state of the molding material

In order to find out how the state of the molding material changes depending on the variations of molecular weight and amounts of the alkane added, the pressure of the molding material at a predetermined position (position indicated by arrow X in Fig. 3(A)) at the inlet side of the extrusion die was measured, and furthermore, the amount of extruded material per hour in the extrusion apparatus was measured when the extruder was driven at the maximum output such that the amount of extruded material was measured during operation at the maximum rate of extrusion (kg/hr), that is, at a screw rotation frequency equivalent to 90% of the maximum motor torque.

For the maximum rate of extrusion, the target value was set to 70 (kg/hr), so that the cases in which the maximum rate of extrusion equal to or higher than this target value were marked "O" and cases in which this target value was not reached were marked "X".

Measurement of physical properties etc. of manufactured molded products (wood boards)

To find out how the molecular weight of the alkane used and variation of amounts of added alkane affect the finally obtained molded products (wood boards), the density, weight, bending strength, and surface smoothness of the obtained molded products (wood boards) were measured or investigated.

For the density, the target value was set to 0.80 to 0.85 g/cm$^3$, measurements within this range were marked "O", and measurements outside this range marked "X" for evaluation.

For the weight of the wood board, the above-described wood board molded to have a width of 145 mm and a thickness of 25 mm was cut into a length of 2000 mm to measure the weight, and measurements within a target value range of 58 to 62 kg were marked "O" and measurements outside this range were marked "X" for evaluation.

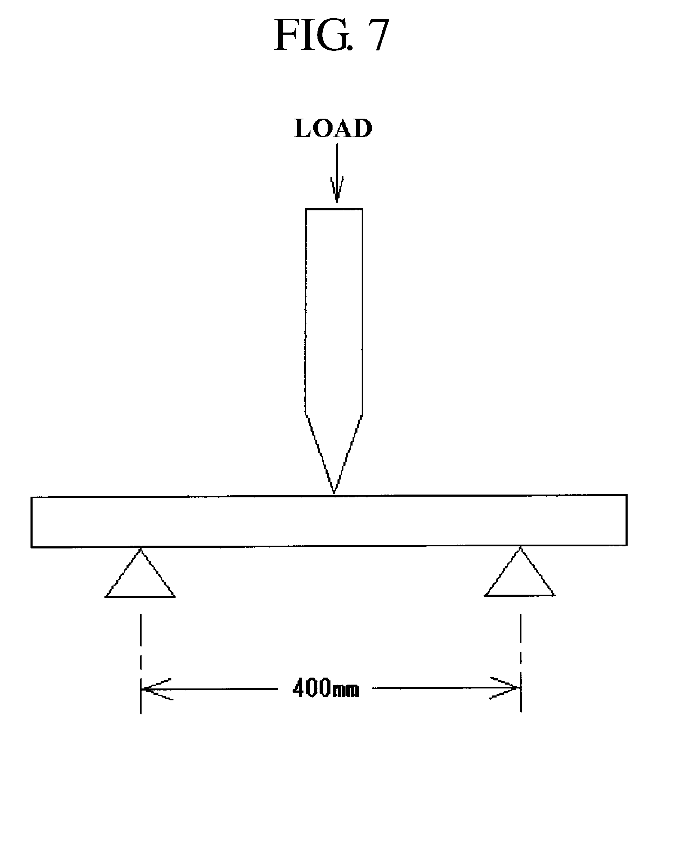

For the bending strength of the wood board, the manufactured wood board was cut into a length of 500 mm and placed on mounting bases disposed with a separation of 400 mm as shown in Fig. 7, and then the load applied to the surface of the wood board was increased at the middle position between the mounting bases until the wood board broke, whereupon the load was measured. For this bending strength, with the target value set to 155 kg, measurements below this target value were marked "X" and measurements equal to or above this target value were marked "O" for evaluation.

The surface state of the wood board was observed by the naked eye to visually check whether or not any wrinkles were generated due to uneven flow of resin and the size of any such wrinkles on a surface of the wood board.

Results of experiment

The results of measurements, observations, and evaluations regarding the above-described items are shown in Table 2.

[Table 2]

| Results of measurement, observation, and evaluation | | | | | | |
|---|---|---|---|---|---|---|
| | Change in molding material | | Physical properties of foam-molded product (board) | | | |
| | Pressure (MPa) | Max. rate of extrusion (kg/hr) | Density (g/cm$^3$) [foaming rate] | Weight (kg/ 2m) | Strength (kg) | Surface state |
| Example 1 | 5.5 | 75 (O) | 0.85 [1.43] (O) | 6.16 (O) | 200 (O) | Minor (good) |
| Example 2 | 5.0 | 75 (O) | 0.82 [1.46] (O) | 5.95 (O) | 195 (O) | No (good) |
| Example 3 | 5.5 | 70 (O) | 0.85 [1.43] (O) | 6.16 (O) | 205 (O) | No (good) |
| Example 4 | 5.5 | 70 (O) | 0.85 [1.43] (O) | 6.16 (O) | 198 (O) | No (good) |
| Example 5 | 5.0 | 75 (O) | 0.82 [1.46] (O) | 5.95 (O) | 195 (O) | No (good) |
| Example 6 | 5.0 | 75 (O) | 0.85 [1.43] (O) | 6.16 (O) | 180 (O) | No (good) |
| Example 7 | 4.8 | 75 (O) | 0.82 [1.46] (O) | 5.95 (O) | 175 (O) | No (good) |
| Comparative Example 1 | 8.0 | 60 (X) | 0.92 [1.30] (X) | 6.67 (X) | 220 (O) | Yes (large) |
| Comparative Example 2 | 6.0 | 65 (X) | 0.90 [1.33] (X) | 6.53 (X) | 209 (O) | Yes (large) |
| Comparative Example 3 | 7.5 | 60 (X) | 0.92 [1.30] (X) | 6.67 (X) | 210 (O) | Yes (large) |
| Comparative Example 4 | 6.5 | 60 (X) | 0.92 [1.30] (X) | 6.67 (X) | 210 (O) | Yes (large) |
| Comparative Example 5 | 6.0 | 65 (X) | 0.90 [1.33] (X) | 6.53 (X) | 210 (O) | Yes (middle) |

(continued)

| | Change in molding material | | Physical properties of foam-molded product (board) | | | |
|---|---|---|---|---|---|---|
| **Results of measurement, observation, and evaluation** | | | | | | |
| | Pressure (MPa) | Max. rate of extrusion (kg/hr) | Density (g/cm$^3$) [foaming rate] | Weight (kg/2m) | Strength (kg) | Surface state |
| Comparative Example 6 | 4.5 | 75 (O) | 1.20 [--] | 8.70 (X) | 245 (O) | No |
| Comparative Example 7 | 7.0 | 65 (X) | 1.20 [--] | 8.70 (X) | 240 (O) | No |
| Comparative Example 8 | 5.0 | 70 (O) | 0.90 [1.30] (X) | 6.54 (X) | 207 (O) | No (good) |
| Comparative Example 9 | 7.5 | 55 (X) | 0.89 [1.35] (X) | 6.45 (X) | 190 (O) | Yes (large) |
| Comparative Example 10 | 6.0 | 62 (X) | 0.90 [1.33] (X) | 6.53 (X) | 195 (O) | Yes (large) |

Considerations

Considerations based on the pressure and the maximum rate of extrusion of the molding materials

In the cases of extrusion foam molding using the molding materials in Examples 1 to 7, it was found that the pressures of the molding materials in the extrusion die were lower than those in Comparative Examples 1 to 5, 9, and 10, except for Comparative Examples 6 and 7 in which no foaming agent was added and Comparative Example 8 in which the alkane compounding ratio was higher than the assumed range.

On the other hand, it was found for extrusion foam molding using the molding materials in Examples 1 to 7 that all the maximum rates of extrusion were as high as 70 (kg/hr) or more, which are higher than the maximum rates of extrusion in Comparative Example 6 (75 kg/hr) and Comparative Example 7 (65 kg/hr) in which no foaming agent was added.

Example 6 received an evaluation similar to that in Example 1, except for the strength. Example 7 received an evaluation similar to that in Example 2, except for the strength (the subsequent considerations are similar and omitted).

Furthermore, Comparative Example 8, in which alkane according to the present invention was used in an amount larger than that according to the present invention, is not preferable because the foaming rate decreases and hinders foaming.

Comparative Example 9 received an evaluation similar to that in Comparative Example 2, except for the strength. Comparative Example 10 received an evaluation similar to that in Comparative Example 5, except for the strength (the subsequent considerations are similar and omitted).

From the points described so far, it was found in extrusion molding using the molding materials in Examples 1 to 7 that adding alkane with a molecular weight determined according to the present invention in an amount determined according to the present invention brings about the effect of preventing foaming gases generated by decomposition of the foaming agent from inflating (pre-foaming) in the barrel of the extruder or the extrusion die and also the effect of promoting the foaming gases to inflate when the molding materials exit the extrusion die and the pressure is released.

In other words, if it is assumed that alkane added to the raw materials does not work to suppress pre-foaming in the extruder or the extrusion die, an increase in the volume of the molding material resulting from pre-foaming must cause the pressure in the extrusion die to increase to a level around the measured value (8.0 MPa) in Comparative Example 1, in which no alkane was added.

However, all measured pressures in the extrusion die in Examples 1 to 7 were lower than not only the pressure (8.0 MPa) in Comparative Example 1 but also the pressures in other Comparative Examples (Comparative Examples 2 to 5, 7, 9, and 10). This means that, pre-foaming of foaming gases in the extruder or the extrusion die is suppressed by adding alkane with a molecular weight determined according to the present invention in an amount determined according to the present invention.

Furthermore, if pre-foaming occurs, forming bubbles in the molding material in the extruder or the extrusion die, the density of the extrusion material passing through the extruder or the extrusion die decreases. For this reason, if the flow volume of the molding material (the volume of the flowing material per unit of time) passing through the extruder or the extrusion die does not change greatly between before and after foaming, the maximum rate of extrusion (weight) must decrease.

However, as a result of comparison between Example 1 and Comparative Example 6 in which the compositions of the molding materials were substantially the same and the only difference lay in whether or not a foaming agent was added, the maximum rates of extrusion in both Example 1 and Comparative Example 6 were 75 (kg/hr), showing that the maximum rate of extrusion did not decrease in Example 1 irrespective of the addition of a foaming agent for extrusion molding.

Thus, it was found that the density of the molding material in a fluid state (molding material before passing through the extrusion die) in Example 1 was maintained at a level almost equivalent to the density in Comparative Example 6, that is, pre-foaming was suppressed, and that foaming of the molding material occurred suddenly in a relatively short period of time from when the molding material exited the outlet of the extrusion die until cooling of the molding material by the molding die started.

As described above, it was found that when the alkane with a molecular weight determined according to the present invention is added in an amount determined according to the present invention, not only can pre-foaming be suppressed in the barrel of the extruder or the extrusion die but also when to start foaming can be controlled by a combination of maintaining and subsequently releasing the pressure in the extruder or the extrusion die.

Considerations based on physical properties etc. of foam-molded products (wood boards)

Considerations based on density

The foam-molded products (wood boards) produced in Examples 1 to 7 exhibited low densities and high foaming rates compared with not only Comparative Examples 6 and 7 in which no foaming agent was added but also Comparative Examples 1 to 5 and 8 to 10 in which the same amount of foaming agent as that in Examples 1 to 7 was added.

It was found from this fact that when alkane with a molecular weight determined according to the present invention is added in an amount determined according to the present invention, not only is it possible to control when to start foaming the molding material, as described above, but also foaming can be promoted.

Factors hindering foaming probably include absorption of foaming gases generated by thermal decomposition of the foaming agent into the wood meal as a porous substance, resulting in no contribution to the foaming of the resin portion. With the compositions described in Examples 1 to 7, wood foam-molded products with low density and high foaming rate, compared with the Comparative Examples, could be manufactured probably because addition of the alkane promoted absorption of foaming gases not into the wood meal but into the resin portion.

On the other hand, even when the alkane with a molecular weight determined according to the present invention was added, wood foam-molded products with low density and high foaming rate could not be produced in Comparative Examples 4 and 5 in which the addition amount was 0.5 wt%, which is below the lower limit (1 wt%) determined according to the present invention. This is probably because, with an alkane addition amount of 1 wt% or less, the alkane was absorbed mainly into the wood meal and did not contribute to absorption of foaming gases into the resin portion.

In contrast, with an alkane addition amount of 1 wt% or more, the alkane dissolves not only into the wood meal but also into the melted resin, and as a result, the foaming gases become more easily absorbed into the melted resin, probably achieving foaming with a high foaming rate, as described above.

In this manner, in Examples 1 to 7, the produced foam-molded products were lightweight (refer to "Weight" in Table 2) and the amount of used raw materials was decreased as a result of the foamability being enhanced due to the added alkane.

Considerations based on strength

The foam-molded products produced using the molding materials in Examples 1 to 7 exhibited a slight decrease in bending strength, compared with the bending strength of 220 (kg) of the foam-molded product in Comparative Example 1 that is a foam-molded product produced by extrusion molding without adding alkane.

However, the decrease in bending strength resulting from addition of the alkane is extremely minor, and the required strength is ensured because the measured strength was significantly higher than the value in the above-described evaluation standards (in compliance with JIS A 5741 "Plastic Floor Parts", a load of 155 kg, which is higher by 5 kg) set as a sufficiently high value for practical use.

Considerations based on surface state

It was found that the surfaces of the foamed synthetic wood products produced through extrusion foam molding carried out using the molding materials in Examples 1 to 7 were superior, without large wrinkles.

In contrast, even when the amount of added alkane was within the range determined according to the present invention, large wrinkles were found on the surfaces in Comparative Examples 2, 3, and 9 in which the molecular weight exceeded 1000 g/mol.

Furthermore, even when alkane with a molecular weight within the range determined according to the present invention was used, wrinkles were found on the surfaces of the produced foamed synthetic wood products in Comparative Examples 4 and 5 in which the amount of added alkane was below 1 wt%.

It is presumed from the above-described results that when alkane with a molecular weight determined according to the present invention was added in an amount determined according to the present invention, smooth movement was ensured due to, for example, a decrease in the contact resistance of the molding material against the inner surface of the molding chamber of the molding die, thereby successfully preventing the above-described wrinkles from being generated. Therefore, it was found that adding 1 to 5 wt% of alkane with molecular weights of 300 to 1000 g/mol is effective in preventing such wrinkles from being generated.

Even when alkane with a molecular weight within the above-described range was added, slight wrinkles, though negligible for practical use, were found on the surface in Example 1, in which alkane with a molecular weight of 900 g/mol, close to the upper limit 1000 g/mol, was added. For this reason, in order to completely prevent such wrinkles from being generated, the molecular weight of the alkane to be added is preferably 800 g/mol or less and more preferably 600 g/mol or less.

Other

Uniformity of foaming

When the cut surfaces of the produced foamed synthetic wood products were observed by the naked eye, no bubbles were found to collect and no voids were found to occur at the center portions of the foamed synthetic wood products produced using the molding materials in Examples 1 to 7, unlike the cases of foamed synthetic wood products produced with conventional techniques, and furthermore, bubbles were distributed densely and uniformly over the entire cut surfaces.

In Comparative Examples 1 to 5, 9, and 10, on the other hand, bubbles were distributed unevenly even though no serious defects, such as the internal void G shown in Fig. 9 described in conventional techniques, were found.

From the above results, although a fatal defect, such as a large void at the center portion, could be prevented from occurring by providing the breaker plate and the resistor body even in the foamed synthetic wood products manufactured using the molding materials in Comparative Examples 1 to 5, 9, and 10, the above-described difference was caused probably because the function for promoting mixing and dissolution of foaming gases to the melted resin to make the dispersion of the foaming gases uniform and for maintaining such a uniform state was not fulfilled sufficiently in the cases where no alkane was added, like in Comparative Example 1, or where the molecular weight or the amount of the added alkane was outside the range determined according to the present invention, like in Comparative Examples 2 to 5.

Therefore, it was found that the addition of 1 to 5 wt% of alkane with a molecular weight of 300 to 1000 g/mol is effective in promoting such mixing and dissolution of foaming gases to the resin and making the dispersion of the foaming gases uniform.

Productivity

As described above, in the case of extrusion molding using the molding materials in Examples 1 to 7, the productivity of foamed synthetic wood products could also be increased because the molding material in the extruder and the extrusion die could be prevented from pre-foaming by adding alkane determined according to the present invention and a relatively high maximum rate of extrusion could be achieved.

Here, the lengths of the manufactured foamed synthetic wood products per hour in the Examples and Comparative Examples are calculated by the following expression using the measurement results in Table 2.

$$[\text{Max. rate of extrusion (kg/hr)/Weight of foamed synthetic wood product (kg/2m)}] \times 2000 \text{ (mm)}$$

The calculation results are shown in Table 3 below.

[Table 3]

| Manufactured length of foamed synthetic wood product per hour | | | |
|---|---|---|---|
| | Max. rate of extrusion (kg/hr) | Weight of molded product (kg/2m) | Manufactured length per hour (m) |
| Example 1 | 75 | 6.16 | 24.35 |
| Example 2 | 75 | 5.95 | 25.21 |
| Example 3 | 70 | 6.16 | 22.73 |
| Example 4 | 70 | 6.16 | 22.73 |
| Example 5 | 75 | 5.95 | 25.91 |
| Example 6 | 75 | 6.16 | 24.35 |
| Example 7 | 75 | 5.95 | 25.21 |
| Comparative Example 1 | 60 | 6.67 | 17.99 |
| Comparative Example 2 | 65 | 6.53 | 19.91 |
| Comparative Example 3 | 60 | 6.67 | 17.99 |
| Comparative Example 4 | 60 | 6.67 | 19.49 |
| Comparative Example 5 | 65 | 6.53 | 19.91 |
| Comparative Example 6 | 75 | 8.70 | 17.24 |
| Comparative Example 7 | 65 | 8.70 | 14.91 |
| Comparative Example 8 | 70 | 6.54 | 21.41 |
| Comparative Example 9 | 55 | 6.45 | 17.05 |
| Comparative Example 10 | 62 | 6.53 | 18.99 |

As is apparent from Table 3 above, 22.73 to 25.91 m of foam-molded products (boards) could be manufactured per hour in Examples 1 to 7, whereas a productivity of more than 22 m per hour was not achieved in any of the Comparative Examples, as shown by the minimum of 14.91 m in Comparative Example 7 (not foamed) and the maximum of 21.41 m in Comparative Example 8.

In this manner, it was found that when alkane with a molecular weight determined according to the present invention is added in an amount determined according to the present invention, a high-quality foamed synthetic wood product can be manufactured while enhancing the productivity.

Descriptions of reference numerals

11.       Extrusion Apparatus
12.       (Screw) Extruder
13.       Barrel
13a.      Outlet (for Barrel 13)
13b.      Delivery Inlet (for Barrel 13)
131.      Melt Zone
132.      Foaming-Agent Decomposing Zone
133.      Foaming-Gas Mixing Zone
14.       Constant-Amount Supply Apparatus
14a.      Molding-Material Feeder
14b.      Foaming-Agent Feeder
15.       Screw (For Extruder 12)
151.      Melt-Kneading Section
152.      Decomposition-Promoting Section
153.      Dispersion-Promoting Section

16. Adapter
16a. Mounting Hole
17. Retaining Ring
20. Extrusion Die
20a. Inlet (For Extrusion Die 20)
20b. Outlet (For Extrusion Die 20)
21. Flow Channel (For Extrusion Die 20)
22. Breaker Plate
22a. Small Holes
25a. Molding Material
26. Resistor Body
26a. Torpedo Section
26b. Bridge Section
30. Molding Die
30a. Inlet (For Molding Die 30)
30b. Outlet (For Molding Die 30)
31. Molding Chamber
32. Flow Channel for a cooling medium
40. Pellet Manufacturing Apparatus
41. Constant-Amount Supply Apparatus
42. Extruder
42a. Barrel
43. Die Nozzle
44. Cutter
44a. Cutter Blade
45. Centrifuge
47. Dryer
50. Winder
625a. Molding Material
641. Extrusion Apparatus
642. Extruder
643. Barrel
643a. Outlet (For Barrel 643)
644. Hopper
645. Screw
650. Die
650a. Molding Chamber
652. Breaker Plate
G. (Internal) Void
X Pressure Measuring Position

**Claims**

1. A molding material for extrusion foam molding, the molding material having a foaming agent added thereto to manufacture a foamed synthetic wood product through extrusion foam molding, comprising:

   wood meal and thermoplastic resin as main ingredients, and 1-5 wt% of alkane with a molecular weight of 300 to 1000 g/mol.

2. The molding material for extrusion foam molding according to Claim 1, wherein the molding material is melt-kneaded such that constituents are uniformly dispersed and is granulated into pellets with a predetermined grain size.

3. The molding material for extrusion foam molding according to Claim 1 or 2, wherein a compounding ratio between the wood meal and the thermoplastic resin is 50-55 wt% of wood meal to 45-50 wt% of resin.

4. The molding material for extrusion foam molding according to any one of Claims 1 to 3, further comprising:

a filler and/or a reinforcing agent and/or a pigment.

5. A method for manufacturing a molding material for extrusion foam molding, the molding material having a foaming agent added thereto to manufacture a foamed synthetic wood product through extrusion foam molding, the method comprising the steps of:

mixing wood meal, thermoplastic resin, and alkane with a molecular weight of 300 to 1000 g/mol such that the alkane accounts for 1-5 wt% of the total to prepare a mixed material; and
melt-kneading the mixed material until constituents are uniformly dispersed and granulating the composition into pellets with a predetermined grain size.

6. The method for manufacturing a molding material for extrusion foam molding according to Claim 5, wherein a compounding ratio between the wood meal and the thermoplastic resin is 50-55 wt% of wood meal to 45-50 wt% of resin.

7. The method for manufacturing a molding material for extrusion foam molding according to Claim 5 or 6, wherein a filler and/or a reinforcing agent and/or a pigment are melt-kneaded with the wood meal, the thermoplastic resin, and the alkane.

8. A foamed synthetic wood product obtained by extruding the molding material according to any one of Claims 1 to 4 and the foaming agent into a predetermined shape using an extrusion apparatus.

9. A method for manufacturing a foamed synthetic wood product, comprising the steps of:

introducing the molding material according to any one of Claims 1 to 4 and a foaming agent into a screw extruder provided in the extrusion apparatus and melt-kneading the molding material at a temperature equal to or higher than a decomposition temperature of the foaming agent;
introducing the molding material extruded by the extruder into a molding chamber of a molding die while maintaining the molding material in a pressurized state; and
releasing the pressure of the molding material when introduced into the molding chamber of the molding die to foam the molding material and cooling and solidifying the molding material passing through the molding chamber of the molding die while forming the molding material into a shape corresponding to a cross-sectional shape of the molding chamber.

10. The method for manufacturing a foamed synthetic wood product according to Claim 9, further comprising the steps of:

providing an extrusion die that communicates from an outlet of the extruder to an inlet of the molding die between the extruder and the molding die of the extrusion apparatus;
applying resistance to the molding material introduced from the outlet of the extruder into the extrusion die to increase the pressure of the molding material in the extruder;
introducing the molding material into the molding chamber of the molding die while maintaining the pressure of the molding material introduced from the extruder into the extrusion die by decreasing a flow passage area of the extrusion die from an inlet towards an outlet of the extrusion die; and
releasing the pressure of the molding material passing through the extrusion die upon passing through the outlet of the extrusion die to foam the molding material at the inlet of the molding die.

11. An extrusion apparatus for a foamed synthetic wood product, comprising:

a screw extruder that receives a molding material containing thermoplastic resin and wood meal as main ingredients and a foaming agent and melt-kneads the molding material at a temperature equal to or higher than a decomposition temperature of the foaming agent;
an extrusion die that communicates with an outlet of the extruder and receives the molding material extruded by the extruder; and
a molding die that communicates with an outlet of the extrusion die and introduces the molding material passing through the extrusion die into an internally formed molding chamber, and cools and solidifies the molding material moving in the molding chamber while forming the molding material into a shape corresponding to an internal shape of the molding chamber,
a mesh-shaped breaker plate that is provided at the outlet portion of the extruder and has many holes, and

a resistor body that is provided in the extrusion die and decreases a flow passage area in the extrusion die from an inlet towards the outlet of the extrusion die.

12. The extrusion apparatus for a foamed synthetic wood product according to Claim 11, wherein the flow passage area in the outlet of the extrusion die is smaller than the area of an inlet of the molding die.

13. The extrusion apparatus for a foamed synthetic wood product according to Claim 11, wherein
the outlet of the extrusion die is formed to have the same shape as the shape of an inlet of the molding chamber of the molding die, and
an end portion at the molding die side of the resistor body is formed to have a cross-sectional shape similar to and slightly smaller than a shape of the outlet of the extrusion die and is disposed at a center position in the outlet of the extrusion die.

14. The extrusion apparatus for a foamed synthetic wood product according to Claim 11 or 13, wherein the screw extruder is a biaxial extruder.

15. The molding material for extrusion foam molding according to Claim 1 or 2, wherein the MFR (melt flow rate) of the thermoplastic resin ranges from 0.5 to 10 (g/10 minutes).

16. The extrusion apparatus for a foamed synthetic wood product according to Claim 11, wherein the MFR (melt flow rate) of the thermoplastic resin ranges from 0.5 to 10 (g/10 minutes).

17. The molding material for extrusion foam molding according to Claim 1 or 2, wherein the thermoplastic resin is one or a mixture of polypropylene (PP), polyethylene (PE), acrylonitrile butadiene styrene resin, and vinyl chloride (PVC).

18. The extrusion apparatus for a foamed synthetic wood product according to Claim 11, wherein the thermoplastic resin is one or a mixture of polypropylene (PP), polyethylene (PE), acrylonitrile butadiene styrene resin, and vinyl chloride (PVC).

# FIG. 1

WOOD
MEAL    RESIN    M    TALC    ALKANE
(+ REINFORCING AGENT + PIGMENT)

41

40

42    DEGASSING

42a

EVACUATING

45

M    43    44    MOLDING
MATERIAL

44a

TO EXTRUSION
FOAM MOLDING

FIG. 2

# FIG. 3

# FIG. 4

(A)

22a

22

B ··· B

(B)

22a   22

# FIG. 5

(A)  26
  26c  26b  26a

(C)  26  26e
  26d

(B)  26  26c  26b  26a

# FIG. 6

(A)

(B)

# FIG. 7

LOAD

400mm

# FIG. 8

EP 2 450 174 A1

RELATED ART

# FIG. 9

G

EP 2 450 174 A1

FIG. 10

<div style="text-align:center">

**INTERNATIONAL SEARCH REPORT**

</div>

| | International application No. |
|---|---|
| | PCT/JP2010/058102 |

**A. CLASSIFICATION OF SUBJECT MATTER**
*B29C47/12*(2006.01)i, *C08J9/04*(2006.01)i, *C08K5/01*(2006.01)i, *C08L97/02* (2006.01)i, *C08L101/00*(2006.01)i, *B29K105/04*(2006.01)n

According to International Patent Classification (IPC) or to both national classification and IPC

**B. FIELDS SEARCHED**

Minimum documentation searched (classification system followed by classification symbols)
B29C47/12, C08J9/04, C08K5/01, C08L97/02, C08L101/00, B29K105/04

Documentation searched other than minimum documentation to the extent that such documents are included in the fields searched
Jitsuyo Shinan Koho          1922-1996    Jitsuyo Shinan Toroku Koho    1996-2010
Kokai Jitsuyo Shinan Koho    1971-2010    Toroku Jitsuyo Shinan Koho    1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2001-71367 A  (Sekisui Chemical Co., Ltd.), 21 March 2001 (21.03.2001), claims; paragraphs [0003], [0013], [0021] to [0024], [0039] (Family: none) | 1-18 |
| Y | WO 2007/052543 A1  (Unitika Ltd.), 10 May 2007 (10.05.2007), claims; paragraphs [0037], [0044], [0109] & US 2009/0258175 A      & EP 1944333 A1 & KR 10-2008-0072815 A   & CN 101268125 A | 1-18 |
| A | JP 2002-187990 A  (Kaneka Corp.), 05 July 2002 (05.07.2002), entire text (Family: none) | 1-18 |

☒ Further documents are listed in the continuation of Box C.          ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 June, 2010 (01.06.10) | 08 June, 2010 (08.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/058102 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2005-307033 A  (Asahi Kasei Chemicals Corp.),<br>04 November 2005 (04.11.2005),<br>entire text; all drawings<br>(Family: none) | 1-18 |
| A | JP 2009-126013 A  (UMG ABS, Ltd.),<br>11 June 2009 (11.06.2009),<br>entire text; all drawings<br>(Family: none) | 1-18 |

Form PCT/ISA/210 (continuation of second sheet) (July 2009)

<div align="center">**INTERNATIONAL SEARCH REPORT**</div>

| | International application No. |
|---|---|
| | PCT/JP2010/058102 |

---

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III      Observations where unity of invention is lacking (Continuation of item 3 of first sheet)**

This International Searching Authority found multiple inventions in this international application, as follows:
```
   The invention (invention 1) in claims 1 - 10, 15, 17 and the invention (invention
2) in claims 11 - 14, 16, 18 are common to each other in a point such that
extrusion molding is carried out while introducing a foaming agent into a
material to be molded including wood powders and a thermoplastic resin.
However, such a point is a mere well-known technique (foe example, refer to
the following document 1), and cannot be considered to be a special technical
feature.  Therefore, it is not deemed that the above-said inventions 1 and
2 satisfy the requirement of unity of invention.
                                        (continued to extra sheet)
```

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| **INTERNATIONAL SEARCH REPORT** | International application No. |
|---|---|
| | PCT/JP2010/058102 |

Continuation of Box No.III of continuation of first sheet(2)

Document 1: JP 2001-71367 A (Sekisui Chemical Co., Ltd.), 21 March 2001 (21.03.2001), [claims], [0003], [0013], [0021] - [0024], [0039], (Family: none)

Form PCT/ISA/210 (extra sheet) (July 2009)

**EP 2 450 174 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8118452 A